# EUROPEAN PATENT APPLICATION

(11) **EP 4 454 750 A1**
(43) Date of publication of application: **30.10.2024**
(21) Application number: 22909883.5
(22) Date of filing: 16.12.2022
(51) Int. Cl.: B01J 20/06, B01J 20/28, B01J 20/30, C01D 15/00, C02F 1/28

(54) **MAGNETIC TITANIUM-BASED LITHIUM ADSORBENT AND PREPARATION METHOD THEREFOR**

(30) Priority: 20.12.2021 CN 202111567446
(71) Applicant: BYD Company Limited, Shenzhen, Guangdong 518118 (CN)
(72) Inventor: WANG, Xiyu, Shenzhen, Guangdong 518118 (CN); LIN, Hongye, Shenzhen, Guangdong 518118 (CN); LIAN, Junlan, Shenzhen, Guangdong 518118 (CN)
(74) Representative: Gulde & Partner
(86) International application number: PCT/CN2022/139610
(87) International publication number: WO 2023/116570

(57) **Abstract**

A magnetic titanium-based lithium adsorbent includes a magnetic composite and a lithium adsorption layer. The lithium adsorption layer is located on an outer surface of the magnetic composite. The magnetic composite includes a magnetic material and a titanium oxide. The lithium adsorption layer includes a lithium titanium oxide. A method for preparing the magnetic titanium-based lithium adsorbent includes the following steps: a magnetic composite is obtained; a precursor of the magnetic titanium-based lithium adsorbent is prepared; and pre-desorption is carried out.

## Description

### CROSS-REFERENCE TO RELATED APPLICATION

The present disclosure is based on and claims priority to and benefits of Chinese Patent Application No. 202111567446.9, filed on December 20, 2021. The entire content of the above-referenced application is incorporated herein by reference.

### FIELD

The present disclosure relates to the technical field of magnetic lithium adsorbent materials, and specifically, to a magnetic titanium-based lithium adsorbent and a preparation method thereof.

### BACKGROUND

With the rapid development of electric bicycles, electric vehicles, and electronics industries, lithium batteries and lithium power batteries have become indispensable products, and the global demand for lithium resources is consequently increased. Salt lake brine and seawater are rich in liquid lithium resources, which are main resources for the future lithium production industry. Therefore, how to extract lithium from these liquid minerals has become a significant issue. At present, lithium extraction by adsorption is regarded as the most promising method for lithium extraction. In recent years, lithium adsorbents, extensively studied by researchers as a novel material, have a memory effect for lithium ions to some extent, stable adsorption capacity and elution rate due to lithiation. In order to facilitate the recovery of lithium adsorbents, magnetic materials are usually introduced into the lithium adsorbents.

In the related art, provided is a magnetic aluminum-based lithium adsorbent produced by a process as follows: Fe₃O₄ powder is added into deionized water with a dispersing agent. With aid of ultrasonic and strong stirring, AlCl₃ powder is added into the resultant Fe₃O₄ dispersion for full dissolution by dispersing and stirring. Next, sodium hydroxide powder is added into the resultant system to gradually precipitate aluminum hydroxide at the interface of Fe₃O₄, to obtain a magnetic core @Al(OH)₃·nH₂O. Then, LiCl powder is added into the above system to disperse and react, to obtain a magnetic core @LiX·2Al(OH)₃·nH₂O. The above mixed solution is subjected to solid-liquid separation by using a magnetic separator, a filter press, or a centrifuge to obtain a dehydrated magnetic core @LiX·2Al(OH)₃·nH₂O as a magnetic aluminum-based lithium adsorbent.

In the related art, provided additionally is a magnetic lithium manganese spinel produced by a process as follows: Fe₃O₄ powder is added into a mixed solution of ethanol and water. Tetraethyl orthosilicate is added with stirring for a certain time. The resultant mixed solution is pumped into an electromagnetic separator again to magnetically separate a silicon dioxide-coated magnetic core Fe₃O₄. With stirring, the silicon dioxide-coated magnetic core Fe₃O₄ is pumped into a manganese chloride solution with addition of a lithium hydroxide solution, and is left for aging to obtain a magnetic lithium manganese compound. The magnetic lithium manganese compound is oven-dried at 60°C, and then placed in a furnace at 350°C to calcine for 5 h, to obtain a magnetic lithium manganese spinel.

The magnetic aluminum-based lithium adsorbent and magnetic lithium manganese spinel in the related art are not suitable for adsorbing lithium from strong-alkaline and carbonate-type brines. The magnetic aluminum-based lithium adsorbent, which will react with carbonate to form a precipitate, is only suitable for adsorbing lithium from chloride-type brines. The magnetic lithium manganese spinel is prone to dissolution loss of Mn in a weak acid and strong alkaline environment, resulting in a decrease in adsorption performance, and is only suitable for adsorbing lithium from neutral to weak alkaline brines. In addition, the lithium adsorbent in the related art tends to separate from its magnetic core due to insufficient binding. After a number of runs, the lithium adsorbent is difficult to recover due to the separation of the outer adsorbent and the magnetic core.

### SUMMARY

In order to resolve the problem that an existing magnetic lithium adsorbent is difficult to be used for lithium extraction from strong-alkaline and carbonate-type brines, the present disclosure provides a magnetic titanium-based lithium adsorbent and a preparation method thereof.

According to one aspect, the present disclosure provides a magnetic titanium-based lithium adsorbent including a magnetic composite and a lithium adsorption layer. The magnetic composite includes a magnetic material and a titanium oxide. The lithium adsorption layer is located on an outer surface of the magnetic composite. The lithium adsorption layer includes a lithium titanium oxide.

According to some embodiments of the present disclosure, the magnetic composite includes: a strong magnetic core formed by the magnetic material, the strong magnetic core includes one or more of Fe₃O₄, iron, cobalt, nickel, or ferrite; and a titanium oxide coating layer formed by the titanium oxide, the titanium oxide coating layer being coated on an outer surface of the strong magnetic core.

According to some embodiments of the present disclosure, the strong magnetic core includes Fe₃O₄, the titanium oxide coating layer includes TiO₂, and a mole ratio of Ti in TiO₂ to Fe in Fe₃O₄ is between 1:2 and 1:5.

According to some embodiments of the present disclosure, an average particle size of the magnetic composite is between 20 nm and 120 nm, an average particle size of the strong magnetic core is between 10 nm and 100 nm, a thickness of the titanium oxide coating layer is between 5 nm and 20 nm, and a thickness of the lithium adsorption layer is between 5 nm and 50 nm.

According to some embodiments of the present disclosure, a saturation magnetization of the magnetic composite is between 20 emu/g and 60 emu/g.

According to some embodiments of the present disclosure, the lithium adsorption layer is a porous structure with a pore volume of between 0.01 mL/g and 0.30 mL/g.

According to some embodiments of the present disclosure, the lithium titanium oxide includes Li₄₋ₓTi_{5-y}M_{y}O₁₂, where x is selected from between 0 and 2, y is selected from between 0 and 0.1, and M is one or more of Mg, Cr, Co, Ni, Mo, Zr, or Zn.

According to some embodiments of the present disclosure, the magnetic titanium-based lithium adsorbent further includes an outer coating layer. The outer coating layer is located on an outer surface of the lithium adsorption layer. The outer coating layer includes a metal oxide. The metal oxide is an oxide of one or more of Mg, Cr, Co, Ni, Mo, Zr, Ti, Zn, or Li, and a thickness of the outer coating layer is between 1 nm and 10 nm.

According to another aspect, the present disclosure provides a method for preparing a magnetic titanium-based lithium adsorbent, including:
a magnetic composite is obtained, including a magnetic material and a titanium oxide;
a precursor of the magnetic titanium-based lithium adsorbent is prepared, the steps include: the magnetic composite, a titanium salt solution, and a lithium salt solution are mixed for reaction, and solid and liquid are separated to obtain an intermediate product particles; and the intermediate product particles are calcined to form a lithium adsorption layer on an outer surface of the magnetic composite, to obtain the precursor of the magnetic titanium-based lithium adsorbent;
pre-desorption is carried out, the steps include: the precursor of the magnetic titanium-based lithium adsorbent is added into an acidic solution to desorb a part of lithium from the lithium adsorption layer, to obtain the magnetic titanium-based lithium adsorbent.

According to some embodiments of the present disclosure, the obtaining the magnetic composite includes:
an iron salt solution is prepared, which includes ferrous ions and ferric ions;
a Fe₃O₄ dispersion is prepared, the steps include: aqueous ammonia is added into the iron salt solution dropwise at between 40°C and 60°C, and solid and liquid are separated to obtain the Fe₃O₄ dispersion;
coating is carried out, the steps include: a TiO₂ dispersion is prepared from a nano-TiO₂, the TiO₂ dispersion is mixed with the Fe₃O₄ dispersion, and solid and liquid are separated to obtain the magnetic composite.

According to some embodiments of the present disclosure, in the iron salt solution, a concentration of iron ions is between 0.5 mol/L and 3 mol/L, where a mole ratio of the ferrous ions to the ferric ions is 1:2; and based on the weight of the TiO₂ dispersion as 100%, TiO₂ is added in an amount of between 10 wt.% and 20 wt.%.

According to some embodiments of the present disclosure, after the magnetic composite is obtained, the magnetic composite is washed with deionized water and absolute ethanol, dried, and ground to a particle size of between 20 nm and 120 nm.

According to some embodiments of the present disclosure, the precursor of the magnetic titanium-based lithium adsorbent is prepared, the steps include: solid and liquid is added into the titanium salt solution with stirring, and the lithium salt solution is added into the titanium salt solution for reaction; and a mole ratio of Fe in the magnetic composite to Li in the lithium salt solution is controlled to be between 1:5 and 1:10, and a mole ratio of Li in the lithium salt solution to Ti in the titanium salt solution is controlled to be between 0.5:1 and 1:3.

According to some embodiments of the present disclosure, in the preparing the precursor of the magnetic titanium-based lithium adsorbent, the titanium salt solution includes a solution of one or more of titanyl sulfate or metatitanic acid, and a concentration of the titanium salt solution is between 1 mol/L and 4 mol/L; and the lithium salt solution includes a solution of one or more of lithium chloride, lithium sulfate, lithium hydroxide, lithium nitrate, or lithium acetate, and a concentration of the lithium salt solution is between 1 mol/L and 3 mol/L.

According to some embodiments of the present disclosure, before the calcining, a metal salt is added into the intermediate product particles for doping.

According to some embodiments of the present disclosure, after the calcining, a metal oxide is added into the precursor of the magnetic titanium-based lithium adsorbent for calcining and coating.

The magnetic titanium-based lithium adsorbent provided in the present disclosure includes the magnetic composite and the lithium adsorption layer. The lithium titanium oxide in the lithium adsorption layer plays a role in the adsorption of lithium, which has the feature of being able to adsorb lithium from strong-alkaline and carbonate-type brines, not reacting with carbonate in brines, and having high stability in a strong alkaline environment, thereby the scope of application in lithium extraction from brines is effectively expanded. The magnetic composite includes the titanium oxide and the magnetic material. The magnetic material is used to provide the magnetic properties of the magnetic composite, so that the magnetic titanium-based lithium adsorbent for lithium adsorption can be magnetically recovered when an operation of lithium enrichment from brines is carried out by using the magnetic titanium-based lithium adsorbent. The titanium oxide can participate in the synthesis of lithium titanium oxide in the lithium adsorption layer, so that the binding of the magnetic composite and the lithium adsorption layer is tighter, effectively preventing the lithium adsorption layer from falling off the surface of the magnetic composite during the long-term use of the magnetic titanium-based lithium adsorbent, and prolonging the service life of the magnetic titanium-based lithium adsorbent.

### DETAILED DESCRIPTION

In order to make the technical problem to be resolved, technical solutions, and beneficial effects in the present disclosure more comprehensible, the present disclosure will be further described in detail with reference to the embodiments below. It should be understood that the embodiments described herein are merely used to explain the present disclosure but are not to limit the present disclosure.

An embodiment of the present disclosure provides a magnetic titanium-based lithium adsorbent including a magnetic composite and a lithium adsorption layer. The lithium adsorption layer is located on an outer surface of the magnetic composite. The magnetic composite includes a magnetic material and a titanium oxide. The lithium adsorption layer includes a lithium titanium oxide.

The magnetic titanium-based lithium adsorbent includes the magnetic composite and the lithium adsorption layer. The lithium titanium oxide in the lithium adsorption layer plays a role in the adsorption of lithium, which has the feature of being able to adsorb lithium from strong-alkaline and carbonate-type brines, not reacting with carbonate in brines, and having high stability in a strong alkaline environment, thereby the scope of application in lithium extraction from brines is effectively expanded. The magnetic composite includes the titanium oxide and the magnetic material. The magnetic material is used to provide the magnetic properties of the magnetic composite, so that the magnetic titanium-based lithium adsorbent for lithium adsorption can be magnetically recovered when an operation of lithium enrichment from brines is carried out by using the magnetic titanium-based lithium adsorbent. The titanium oxide can participate in the synthesis of lithium titanium oxide in the lithium adsorption layer, so that the binding of the magnetic composite and the lithium adsorption layer is tighter, effectively preventing the lithium adsorption layer from falling off the surface of the magnetic composite during the long-term use of the magnetic titanium-based lithium adsorbent, and prolonging the service life of the magnetic titanium-based lithium adsorbent.

In some embodiments, the lithium adsorption layer is located on the entire outer surface or part of the outer surface of the magnetic composite.

In some embodiments, the magnetic material and the titanium oxide in the magnetic composite may be bound in different forms. For example, the magnetic material and the titanium oxide may be doped and mixed with each other, or the titanium oxide is used as a coating layer of the magnetic material. When the titanium oxide is used as a coating layer of the magnetic material, the magnetic material may act as a strong magnetic core and the titanium oxide may act as a titanium oxide coating layer.

In some embodiments, the magnetic composite includes a strong magnetic core formed by the magnetic material and a titanium oxide coating layer formed by the titanium oxide, the strong magnetic core includes one or more of Fe₃O₄, iron, cobalt, nickel, or ferrite, and the titanium oxide coating layer coats an outer surface of the strong magnetic core.

With the use of the titanium oxide as the coating layer of the strong magnetic core, on the one hand, the titanium oxide has good chemical inertness, which can effectively protect and isolate the strong magnetic core therein, ensuring the stability of the strong magnetic core and avoiding failure of magnetism. On the other hand, the contact area between the magnetic composite and the lithium adsorption layer is also increased. Because the titanium oxide coating layer has good affinity with the lithium titanium oxide of the lithium adsorption layer, it is beneficial to increasing the bonding strength between the magnetic composite and the lithium adsorption layer.

In some embodiments, the magnetic material acts as a strong magnetic core and includes Fe₃O₄, the titanium oxide acts as a titanium oxide coating layer and includes TiO₂, and a mole ratio of Ti in TiO₂ to Fe in Fe₃O₄ is between 1:2 and 1:5.

Fe₃O₄ has strong magnetic properties and good stability, has low material costs, can show high magnetic properties, and is beneficial to the magnetic separation operation on the magnetic titanium-based lithium adsorbent.

In some embodiments, the titanium oxide coating layer may include Ti₃O₅.

The above element proportions can ensure that the magnetic composite has enough Fe₃O₄ to satisfy its magnetization requirements, and enable TiO₂ to effectively coat the surface of Fe₃O₄ and provide formation sites for the lithium titanium oxide of the lithium adsorption layer in the subsequent process.

In some embodiments, an average particle size of the magnetic composite is between 20 nm and 120 nm, an average particle size of the strong magnetic core is between 10 nm and 100 nm, a thickness of the titanium oxide coating layer is between 5 nm and 20 nm, and a thickness of the lithium adsorption layer is between 5 nm and 50 nm.

When the thickness of the titanium oxide coating layer is within the above range, the bonding strength of the lithium adsorption layer on the strong magnetic core can be significantly increased, preventing the lithium adsorption layer from falling off during repeated use, and the magnetic properties of the strong magnetic core are not significantly affected and satisfy the magnetization required for magnetic separation.

The lithium adsorption capacity of the magnetic titanium-based lithium adsorbent is determined by the content of the lithium adsorption layer, so when the thickness of the lithium adsorption layer is within the above range, the magnetic titanium-based lithium adsorbent has a high lithium adsorption capacity per unit volume.

In some embodiments, a saturation magnetization of the magnetic composite is between 20 emu/g and 60 emu/g.

In some embodiments, the lithium adsorption layer is a porous structure with a pore volume of between 0.01 mL/g and 0.30 mL/g. The pore volume of the lithium adsorption layer is measured by the BET specific surface area method.

When the lithium adsorption layer has a porous structure, the contact area between the lithium adsorption layer and the brine can be increased, thereby facilitating the adsorption of lithium ions in the brine onto the lithium adsorption layer, to increase the lithium adsorption capacity of the magnetic titanium-based lithium adsorbent.

In some embodiments, the lithium titanium oxide includes Li₄₋ₓTi_{5-y}M_{y}O₁₂, where x is selected from between 0 and 2, y is selected from between 0 and 0.1, and M is one or more of Mg, Cr, Co, Ni, Mo, Zr, or Zn.

When x is 0, the lithium titanium oxide is in a full lithiation state, and it is necessary to carry out pre-desorption by an acidic solution to form vacancies by partial delithiation from the lithium titanium oxide, resulting in x of greater than 0. In this case, upon running into lithium ions in the brine, the lithium titanium oxide can allow the lithium ions to intercalate therein to reach a full lithiation state, and the lithium titanium oxide in the full lithiation state can be redelithiated to enrich lithium ions, leading to recycling of the magnetic titanium-based lithium adsorbent.

The metal element M can be intercalated into the lattice of the lithium titanium oxide by doping to improve the structural stability of the lithium titanium oxide and reduce the dissolution loss of titanium ions from the lithium titanium oxide during long-term soaking in the brine. When y is selected as 0, the lithium titanium oxide is not doped with the metal element M.

In some other embodiments, the magnetic titanium-based lithium adsorbent further includes an outer coating layer. The outer coating layer is located on an outer surface of the lithium adsorption layer. The outer coating layer includes a metal oxide. The metal oxide is an oxide of one or more of Mg, Cr, Co, Ni, Mo, Zr, Ti, Zn, or Li, and a thickness of the outer coating layer is between 1 nm and 10 nm.

With the use of the metal oxide as the outer coating layer coated outside the lithium adsorption layer, the lithium adsorption layer can be protected from being in direct contact with the brine, and the molecular structure stability of the lithium adsorption layer is effectively ensured.

When the thickness of the outer coating layer is within the above range, the lithium adsorption layer can be effectively protected and the dissolution of titanium ions can be reduced. The outer coating layer of this thickness allows lithium ions to pass through and avoids blocking lithium ions, achieving a high lithium-ion adsorption efficiency.

Another embodiment of the present disclosure provides a method for preparing the magnetic titanium-based lithium adsorbent, including the following steps:
a magnetic composite is obtained, including a magnetic material and a titanium oxide;
a precursor of the magnetic titanium-based lithium adsorbent is prepared, the steps include: the magnetic composite, a titanium salt solution, and a lithium salt solution are mixed for reaction, and solid and liquid are separated to obtain intermediate product particles; and the intermediate product particles are calcined to form a lithium adsorption layer on an outer surface of the magnetic composite, to obtain the precursor of the magnetic titanium-based lithium adsorbent;
pre-desorption is carried out, the steps include: the precursor of the magnetic titanium-based lithium adsorbent is added into an acidic solution to desorb a part of lithium from the lithium adsorption layer, to obtain the magnetic titanium-based lithium adsorbent.

The magnetic titanium-based lithium adsorbent prepared by the above preparation method can adsorb lithium ions from strong-alkaline and carbonate-type brines, and has a good structural stability and a long service life.

In some embodiments, a magnetic composite is obtained, the steps include:
an iron salt solution is prepared, including ferrous ions and ferric ions;
a Fe₃O₄ dispersion is prepared, the steps include: aqueous ammonia is added into the iron salt solution dropwise at between 40°C and 60°C, and solid and liquid are separated to obtain the Fe₃O₄ dispersion;
coating is carryed out, the steps include: a TiO₂ dispersion is prepared from a nano-TiO₂, the TiO₂ dispersion with the Fe₃O₄ dispersion is mixed, and solid and liquid separated to obtain the magnetic composite.

Fe₃O₄ in the Fe₃O₄ dispersion prepared by the above method has a large particle size to form a Fe₃O₄ core. TiO₂ in the TiO₂ dispersion has a small particle size. When the Fe₃O₄ dispersion and the TiO₂ dispersion are mixed, TiO₂ self-assembles on the surface of the Fe₃O₄ core to form the TiO₂ coating layer to further form the magnetic composite. The above method has the advantages of low synthesis temperature, short reaction time, and uniform particle size of the prepared magnetic composite.

Specifically, the Fe₃O₄ dispersion may be added into the TiO₂ dispersion dropwise, or the TiO₂ dispersion may be added into the Fe₃O₄ dispersion dropwise.

In some embodiments, both the Fe₃O₄ dispersion and the TiO₂ dispersion are in the form of colloids.

In some embodiments, the operation of preparing the Fe₃O₄ dispersion includes heating in a water bath to keep the temperature of the iron salt solution at between 40°C and 60°C, dropwise adding the aqueous ammonia includes rapid adding and then slow adding the aqueous ammonia with stirring at between 200 rpm and 500 rpm to adjust the pH value of the solution to 11, aging for between 2 h and 8 h after reaction for between 1 h and 4 h, and repeated washing, centrifuging, separating, and dispersing of the resulting product, to obtain the Fe₃O₄ dispersion.

In some embodiments, in the iron salt solution, a concentration of iron ions is between 0.5 mol/L and 3 mol/L, where a mole ratio of the ferrous ions to the ferric ions is 1:2; and based on the weight of the TiO₂ dispersion as 100%, TiO₂ is added in an amount of between 10 wt.% and 20 wt.%.

In some embodiments, the ferrous ions are derived from ferrous chloride (FeCl₂·4H₂O), the ferric ions are derived from ferric chloride (FeCl₃·6H₂O), the solvent of the iron salt solution is deionized water, and ferrous chloride and ferric chloride are added together into deionized water with stirring to fully dissolve therein.

In some embodiments, the ferrous ions and the ferric ions may be derived from other iron salts such as FeSO₄ and Fe₂(SO₄)₃.

The intermediate product Fe₃O₄ contains both iron(II) and iron(III) in a ratio of 1:2, so the mole ratio of the ferrous ions to the ferric ions is controlled to be 1:2 to effectively ensure the purity of Fe₃O₄ and prevent the resulted Fe₃O₄ from containing non-magnetic substances such as FeO and Fe₂O₃.

In some embodiments, in the step of coating, the TiO₂ dispersion is heated in a water bath to between 40°C and 60°C, the Fe₃O₄ dispersion is added into the TiO₂ dispersion dropwise, and then the resultant solution is stirred at between 200 rpm and 400 rpm for between 1 h and 4 h.

In some embodiments, after the magnetic composite is obtained, the magnetic composite is washed with deionized water and absolute ethanol, dried, and ground to a particle size of between 20 nm and 120 nm.

Specifically, the solid-liquid separation is carried out by using a centrifuge at a rotational speed of between 2500 rpm and 4500 rpm for between 10 min and 60 min to obtain the magnetic composite. The separated magnetic composite is washed at a stirring speed of between 150 rpm and 500 rpm with deionized water and absolute ethanol at between 10°C and 30°C, and then filtered and separated to obtain a filtered substance. The filtered substance is washed with deionized water in a ratio of 1 :(5-50) for between 5 min and 20 min each time, a total of between 2 times and 5 times. Through washing, ionic impurities can be effectively removed from the magnetic composite, thereby avoiding the influence of the ionic impurities on the subsequent preparation of the lithium adsorption layer.

The washed magnetic composite is placed in a vacuum drying oven to dry at between 60°C and 90°C for between 5 h and 12 h. The dried magnetic composite is ground in an agate crucible for between 1 h and 3 h to obtain the magnetic composite with an average particle size of between 30 nm and 80 nm and a saturation magnetization of between 20 emu/g and 60 emu/g.

In some embodiments, the precursor of the magnetic titanium-based lithium adsorbent is prepared, the steps include: the magnetic composite is added into the titanium salt solution with stirring at a speed of between 300 rpm and 500 rpm, and the lithium salt solution is added into the titanium salt solution for reaction; and a mole ratio of Fe in the magnetic composite to Li in the lithium salt solution is controlled to be between 1:5 and 1:10, and a mole ratio of Li in the lithium salt solution to Ti in the titanium salt solution is controlled to be between 0.5:1 and 1:3.

The titanium salt solution is selected from titanium salts that can react with lithium ions to precipitate.

In some embodiments, in the preparing the precursor of the magnetic titanium-based lithium adsorbent, the titanium salt solution includes a solution of one or more of titanyl sulfate or metatitanic acid, and a concentration of the titanium salt solution is between 1 mol/L and 4 mol/L; and the lithium salt solution includes a solution of one or more of lithium chloride, lithium sulfate, lithium hydroxide, lithium nitrate, or lithium acetate, and a concentration of the lithium salt solution is between 1 mol/L and 3 mol/L.

The titanium salt solution dissolves at between 20°C and 60°C at a stirring speed of between 150 rpm and 500 rpm.

A stirring speed of the lithium salt solution is between 150 rpm and 500 rpm.

In some embodiments, the lithium salt solution is selected from a lithium hydroxide solution. Compared with other lithium salt solutions, when the lithium salt solution is selected from the lithium hydroxide solution, the lithium adsorption layer with a porous structure can be formed, thereby effectively increasing the lithium adsorption capacity from the brine.

In some embodiments, in the step of preparing a precursor of the magnetic titanium-based lithium adsorbent, the magnetic composite, the titanium salt solution, and the lithium salt solution are mixed and stirred for between 1 h and 4 h, and then left for aging at between 10°C and 30°C for between 5 h and 20 h, to obtain a mixture, and the mixture is filtered by using a vacuum filter in a negative pressure of between 0.02 MPa and 0.08 MPa to obtain intermediate product particles. The intermediate product particles obtained after filtering are washed with deionized water at a stirring speed of between 100 rpm and 300 rpm at between 10°C and 30°C to obtain a filtered substance, and the filtered substance is washed with deionized water in a ratio of 1:(5-50) for between 5 min and 20 min. The washing temperature and speed should not be too high, and the washing time should not be too long, so as not to damage the structure of the intermediate product particles. The intermediate product particles obtained after washing are filtered by using a vacuum filter in a negative pressure of between 0.02 MPa and 0.08 MPa.

The intermediate product particles are calcined in an air atmosphere at between 350°C and 550°C for between 4 h and 12 h to form the lithium adsorption layer on the surface of the magnetic composite. In this embodiment, the obtained lithium adsorption layer in a full lithiation state is Li₄Ti₅O₁₂.

In some embodiments, before the calcining, a metal salt is added into the intermediate product particles for doping. The metal salt includes a salt of one or more of Mg, Cr, Co, Ni, Mo, Zr, or Zn.

During the calcining, metal ions of the metal salt are doped into the lattice of the lithium adsorption layer to replace some of titanium, so that the obtained lithium adsorption layer has a more stable structure.

In some embodiments, after the calcining, a metal oxide is added into the precursor of the magnetic titanium-based lithium adsorbent for calcining and coating. The metal oxide includes an oxide of one or more of Mg, Cr, Co, Ni, Mo, Zr, Ti, Zn, or Li.

In some embodiments, the precursor of the magnetic titanium-based lithium adsorbent is partially delithiated through the pre-desorption, so that the lithium adsorption layer is in the delithiation state and provides vacancies for lithium, and thus has the capability of lithium adsorption. Specifically, the precursor of the magnetic titanium-based lithium adsorbent is predesorbed with an acidic solution in a solid-liquid mass ratio of 1:(10-100), stirring at between 150 rpm and 400 rpm, at between 20°C and 50°C for between 2 h and 10 h. The acidic solution is selected from one or more of a sulfuric acid solution, a hydrochloric acid solution, or a nitric acid solution. An acid concentration of the acidic solution is between 0.5 mol/L and 2 mol/L. In this embodiment, the obtained lithium adsorption layer after pre-desorption is Li₄₋ₓTi₅O₁₂.

The present disclosure is further described through the following examples.

### Example 1

This example is used to describe the magnetic titanium-based lithium adsorbent and the preparation method thereof disclosed in the present disclosure, including the following steps.

At room temperature, FeCl₂ and FeCl₃ were formulated in a mole ratio of 1:2 into an iron salt solution of a concentration of 0.5 mol/L, a nano-TiO₂ was formulated into a 10 wt.% TiO₂ colloid solution, lithium hydroxide was formulated into a lithium salt solution of a concentration of 3 mol/L, and titanyl sulfate was formulated into a titanium salt solution of a concentration of 3 mol/L.

While stirring at 200 rpm, aqueous ammonia was added into the iron salt solution dropwise at 50°C to adjust the pH value of the solution to 11. After reacting for 1 h and then aging for 4 h, the obtained product was washed, centrifuged, and separated to obtain a pure Fe₃O₄ colloid solution. The TiO₂ colloid was added in the Fe₃O₄ colloid solution dropwise in a titanium-iron mole ratio of 1:3 and then stirred at 200 rpm for 2 h. Solid-liquid separation was carried out by using a centrifuge. The separated substance was washed and then dried in a vacuum drying oven. The dried substance was ground for 1 h to obtain a magnetic composite Fe₃O₄/TiO₂. The magnetic composite was slowly added into the titanium salt solution while stirring, followed by adding the lithium salt solution, to make a mole ratio of iron to lithium 1:5 and a mole ratio of lithium to titanium 1:2. The resultant mixture was stirred for 4 h and then aged for 10 h, and then filtered by using a vacuum filter to obtain intermediate product particles. After washing and filtering, the intermediate product particles were placed in a muffle furnace and calcined in an air atmosphere at 500°C for 12 h to obtain a precursor of a magnetic titanium-based lithium adsorbent with a lithium adsorption layer of full lithiation state Li₄Ti₅O₁₂. The precursor of the magnetic titanium-based lithium adsorbent was added in 0.5 mol/L sulfuric acid to carry out pre-desorption in a solid-liquid mass ratio of 1:20 while stirring at 200 rpm for 4 h to obtain the magnetic titanium-based lithium adsorbent with a lithium adsorption layer of Li_{2.2}Ti₅O₁₂. In this case, the particle size of the magnetic core Fe₃O₄ was 90 nm, the thickness of the TiO₂ layer was 10 nm, and the thickness of the Li_{2.2}Ti₅O₁₂ layer was 30 nm.

### Example 2

This example is used to describe the magnetic titanium-based lithium adsorbent and the preparation method thereof disclosed in the present disclosure, including most of the steps in Example 1 with the following differences.

The lithium salt solution was selected from a lithium chloride solution of a concentration of 2 mol/L.

The titanium salt solution was selected from a metatitanic acid solution of a concentration of 2 mol/L.

The calcining was carried out at 400°C for 5 h.

### Example 3

This example is used to describe the magnetic titanium-based lithium adsorbent and the preparation method thereof disclosed in the present disclosure, including most of the steps in Example 1 with the following differences.

The concentration of the TiO₂ colloid was 20 wt.%.

The TiO₂ colloid was added into the Fe₃O₄ colloid in a titanium-iron mole ratio of 1:2. The thickness of the TiO₂ layer was 20 nm.

### Example 4

This example is used to describe the magnetic titanium-based lithium adsorbent and the preparation method thereof disclosed in the present disclosure, including most of the steps in Example 1 with the following differences.

The concentration of the TiO₂ colloid was 5 wt.%.

The TiO₂ colloid was added into the Fe₃O₄ colloid in a titanium-iron mole ratio of 1:6. The thickness of the TiO₂ layer was 2 nm.

### Example 5

This example is used to describe the magnetic titanium-based lithium adsorbent and the preparation method thereof disclosed in the present disclosure, including most of the steps in Example 1 with the following differences.

The concentration of the TiO₂ colloid was 20 wt.%.

The TiO₂ colloid was added into the Fe₃O₄ colloid in a titanium-iron mole ratio of 1:1. The thickness of the TiO₂ layer was 30 nm.

### Example 6

This example is used to describe the magnetic titanium-based lithium adsorbent and the preparation method thereof disclosed in the present disclosure, including most of the steps in Example 1 with the following differences.

Lithium hydroxide was formulated into a lithium salt solution of a concentration of 0.5 mol/L. Titanyl sulfate was formulated into a titanium salt solution of a concentration of 0.5 mol/L.

The thickness of the formed Li_{2.2}Ti₅O₁₂ layer was 8 nm.

### Example 7

This example is used to describe the magnetic titanium-based lithium adsorbent and the preparation method thereof disclosed in the present disclosure, including most of the steps in Example 1 with the following differences.

Lithium hydroxide was formulated into a lithium salt solution of a concentration of 0.1 mol/L. Titanyl sulfate was formulated into a titanium salt solution of a concentration of 0.1 mol/L.

The thickness of the formed Li_{2.2}Ti₅O₁₂ layer was 3 nm.

### Example 8

This example is used to describe the magnetic titanium-based lithium adsorbent and the preparation method thereof disclosed in the present disclosure, including most of the steps in Example 1 with the following differences.

Lithium hydroxide was formulated into a lithium salt solution of a concentration of 6 mol/L. Titanyl sulfate was formulated into a titanium salt solution of a concentration of 6 mol/L.

The thickness of the formed Li_{2.2}Ti₅O₁₂ layer was 60 nm.

### Example 9

This example is used to describe the magnetic titanium-based lithium adsorbent and the preparation method thereof disclosed in the present disclosure, including most of the steps in Example 1 with the following differences.

Before the calcining, Mg(NO₃) ₂ was added into the intermediate product particles for doping. Then, the lithium adsorption layer of the obtained magnetic titanium-based lithium adsorbent was Li_{2.2}Ti_{4.9}Mg_{0.1}O₁₂.

### Example 10

This example is used to describe the magnetic titanium-based lithium adsorbent and the preparation method thereof disclosed in the present disclosure, including most of the steps in Example 1 with the following differences.

Before the calcination, CoCOs was added into the intermediate product particles for doping. Then, the lithium adsorption layer of the obtained magnetic titanium-based lithium adsorbent was Li_{2.2}Ti_{4.9}Co_{0.1}O₁₂.

### Example 11

This example is used to describe the magnetic titanium-based lithium adsorbent and the preparation method thereof disclosed in the present disclosure, including most of the steps in Example 1 with the following differences.

Before the calcining, Zn(NO₃) ₂ was added into the intermediate product particles for doping. Then, the lithium adsorption layer of the obtained magnetic titanium-based lithium adsorbent was Li_{2.2}Ti_{4.9}Zn_{0.1}O_{12.}

### Example 12

This example is used to describe the magnetic titanium-based lithium adsorbent and the preparation method thereof disclosed in the present disclosure, including most of the steps in Example 1 with the following differences.

After the calcining, ZnO was added into the precursor of the magnetic titanium-based lithium adsorbent and then calcined again for coating. The thickness of the outermost ZnO coating layer was 5 nm.

### Example 13

This example is used to describe the magnetic titanium-based lithium adsorbent and the preparation method thereof disclosed in the present disclosure, including most of the steps in Example 1 with the following differences.

After the calcining, ZnO was added into the precursor of the magnetic titanium-based lithium adsorbent and then calcined again for coating. The thickness of the outermost ZnO coating layer was 0.3 nm.

### Example 14

This example is used to describe the magnetic titanium-based lithium adsorbent and the preparation method thereof disclosed in the present disclosure, including most of the steps in Example 1 with the following differences.

After the calcining, ZnO was added into the precursor of the magnetic titanium-based lithium adsorbent and then calcined again for coating. The thickness of the outermost ZnO coating layer was 15 nm.

### Example 15

This example is used to describe the magnetic titanium-based lithium adsorbent and the preparation method thereof disclosed in the present disclosure, including most of the steps in Example 1 with the following differences.

After the calcining, MgO was added into the precursor of the magnetic titanium-based lithium adsorbent and then calcined again for coating. The thickness of the outermost MgO coating layer was 5 nm.

### Example 16

This example is used to describe the magnetic titanium-based lithium adsorbent and the preparation method thereof disclosed in the present disclosure, including most of the steps in Example 1 with the following differences.

After the calcination, Li₂O was added into the precursor of the magnetic titanium-based lithium adsorbent and then calcined again for coating. The thickness of the outermost Li₂O coating layer was 5 nm.

### Comparative Example 1

This comparative example provides a magnetic manganese-based lithium adsorbent and a preparation method thereof, including the following steps:

Fe₃O₄ was added into a mixed solution of ethanol and water in a volume ratio of 1:1. Tetraethyl orthosilicate was added while stirring in a silicon-iron mole ratio of 1:3, stirred for 5 h, and then subjected to solid-liquid separation, to obtain a Fe₃O₄/SiO₂ composite. The Fe₃O₄/SiO₂ composite was added into a manganese chloride solution of a concentration of 2 mol/L while stirring at 500 rpm, followed by adding a lithium hydroxide solution of a concentration of 3 mol/L, to make a mole ratio of iron to manganese 1:2 and a mole ratio of lithium to manganese 5:1. The resultant mixture was stirred for 1 h and then left for aging for 12 h to obtain a magnetic lithium manganese compound. After separation and oven-drying, the magnetic lithium manganese compound was placed in a muffle furnace and calcined at 350°C for 5 h to obtain a precursor of the magnetic manganese-based lithium adsorbent. The precursor was added into 0.5 mol/L sulfuric acid and stirred for 5 h to obtain a magnetic manganese dioxide lithium ion sieve.

### Comparative Example 2

This comparative example provides a magnetic titanium-based lithium adsorbent and a preparation method thereof, including most of the steps in Example 1 with the following differences.

A method for preparing a magnetic composite is as follows. Fe₃O₄ was added into a mixed solution of ethanol and water in a volume ratio of 1:1. Tetraethyl orthosilicate was added while stirring in a silicon-iron mole ratio of 1:3, stirred for 5 h, and then subjected to solid-liquid separation, to obtain a Fe₃O₄/SiO₂ composite.

By replacing the magnetic composite Fe₃O₄/SiO₂ in Example 1, the Fe₃O₄/TiO₂ composite was used for subsequent steps.

### Performance Test

The above prepared magnetic titanium-based lithium adsorbents and magnetic manganese-based lithium adsorbent were subjected to the following performance tests.

### Adsorption Performance Test:

A magnetic adsorbent was subjected to the adsorption performance test with a lithium-containing brine of pH 12. The lithium-containing brine contained 1 g/L Li⁺ and 30 g/L Na⁺. 10 g of magnetic adsorbent was weighed to carry out adsorption in a solid-liquid mass ratio of 1:30 at room temperature for 120 min while stirring at 300 rpm. After the adsorption, the magnetic adsorbent was filtered. Desorption was carried out with 0.1 mol/L sulfuric acid in a solid-liquid mass ratio of 1:10 for 30 min while stirring at 300 rpm. The obtained Li⁺ concentration after adsorption, Li⁺ adsorption capacity, Li⁺ concentration in desorption solution, Ti/Mn dissolution loss, and saturation magnetization of adsorbent are shown in Table 1. The above steps were repeated for 50 times to obtain the Li⁺ adsorption capacity shown in Table 1.

**Table 1**

| Experiment | Li⁺ concentration after adsorption, mg/L | Li⁺ adsorption capacity, mg/g | Li⁺ concentration in desorption solution, g/L | Ti/Mn dissolution loss after one time, % | Li⁺ adsorption capacity after 50 times, mg/g | Saturation magnetization, emu/g | Pore volume, mL/g |
|---|---|---|---|---|---|---|---|
| Example 1 | 37 | 28.89 | 2.75 | 0.09 | 26.59 | 50.1 | 0.25 |
| Example 2 | 291 | 21.27 | 1.94 | 0.17 | 19.46 | 48.7 | 0.10 |
| Example 3 | 49 | 28.53 | 2.70 | 0.13 | 22.64 | 27.3 | 0.25 |
| Example 4 | 39 | 28.83 | 2.69 | 0.14 | 22.39 | 52.9 | 0.25 |
| Example 5 | 40 | 28.80 | 2.73 | 0.11 | 25.68 | 19.1 | 0.25 |
| Example 6 | 137 | 25.89 | 2.24 | 0.14 | 24.19 | 50.5 | 0.25 |
| Example 7 | 254 | 22.38 | 2.11 | 0.15 | 20.64 | 50.8 | 0.25 |
| Example 8 | 32 | 29.04 | 2.79 | 0.10 | 28.12 | 47.9 | 0.25 |
| Example 9 | 60 | 28.20 | 2.74 | 0.05 | 27.50 | 49.8 | 0.22 |
| Example 10 | 114 | 26.58 | 2.55 | 0.08 | 24.94 | 49.6 | 0.18 |
| Example 11 | 97 | 27.09 | 2.61 | 0.07 | 25.77 | 49.8 | 0.19 |
| Example 12 | 82 | 27.54 | 2.62 | 0.03 | 27.13 | 49.5 | 0.20 |
| Example 13 | 71 | 27.87 | 2.65 | 0.05 | 27.11 | 49.7 | 0.21 |
| Example 14 | 122 | 26.34 | 2.51 | 0.04 | 25.87 | 48.9 | 0.17 |
| Example 15 | 104 | 26.88 | 2.60 | 0.04 | 26.24 | 49.1 | 0.18 |
| Example 16 | 116 | 26.52 | 2.55 | 0.05 | 25.97 | 49.3 | 0.19 |
| Comparative Example 1 | 577 | 12.69 | 1.26 | 64.5 | - | 33.6 | 0.30 |
| Comparative Example 2 | 71 | 27.87 | 2.65 | 0.40 | 9.5 | 49.0 | 0.24 |

It can be learned from the experiment results of Examples 1-16 and Comparative Example 1 in Table 1 that in the case of lithium adsorption from strong-alkaline brines, after lithium adsorption to and desorption from the magnetic titanium-based lithium adsorbent prepared by the preparation method provided in the present disclosure, it has the adsorption capacity significantly increased compared with the magnetic manganese-based lithium adsorbent in the related art, and the low Ti dissolution loss, while the magnetic manganese-based lithium adsorbent has the Mn dissolution loss of up to 64.5%, and allows the brine to be pink after adsorption due to dissolution of a mass of Mn.

It can be learned from the test results of Examples 1 and 2 that the choice between lithium salt and titanium salt also has a certain influence on the adsorption and desorption performance and porosity of the magnetic titanium-based lithium adsorbent. When the lithium salt is selected from lithium hydroxide and the titanium salt is selected from titanyl sulfate, it is beneficial to the formation of the porous structure of the lithium adsorption layer, thereby increasing the lithium adsorption capacity.

It can be learned from the test results of Examples 1 and 3-5 that the thickness of the TiO₂ layer in the magnetic composite has a certain influence on the bonding strength of the lithium adsorption layer and the saturation magnetization of the magnetic composite. When the thickness of the TiO₂ layer is between 5 nm and 20 nm, the effective binding of the lithium adsorption layer and the magnetic composite can be further ensured while avoiding the influence on the saturation magnetization, which is beneficial to the magnetic separation and recovery operation.

It can be learned from the test results of Examples 1 and 6-8 that when the thickness of the Li₄₋ₓTi₅O₁₂ layer is within the range of between 5 nm and 50 nm, the magnetic titanium-based lithium adsorbent has a good lithium adsorption capacity and maintains a good saturation magnetization.

It can be learned from the test results of Examples 1 and 9-16 that by doping a metal salt or coating a metal oxide, the adsorption performance of the magnetic titanium-based lithium adsorbent can be maintained to a certain extent, and the dissolution loss of titanium can be reduced. It can be learned from the test results of Examples 12-14 that when the thickness of the outer coating layer is within the range of between 1 nm and 10 nm, a complete coating can be formed on the magnetic titanium-based lithium adsorbent, which is beneficial to the intercalation and deintercalation of lithium ions.

It can be learned from the test results of Example 1 and Comparative Example 2 that TiO₂ in the magnetic composite can increase the bonding strength of the magnetic composite and the lithium adsorption layer, thereby helping maintain the stability of Li⁺ adsorption performance after multiple times of use.

The foregoing descriptions are merely some embodiments of the present disclosure, but are not to limit the present disclosure. Any modification, equivalent replacement, and improvement made within the spirit and principle of the present disclosure shall fall within the protection scope of the present disclosure.

## Claims

1. A magnetic titanium-based lithium adsorbent, comprising:
a magnetic composite, comprising a magnetic material and a titanium oxide; and
a lithium adsorption layer, located on an outer surface of the magnetic composite, and comprising a lithium titanium oxide.

2. The magnetic titanium-based lithium adsorbent according to claim 1, wherein the magnetic composite comprises:
a strong magnetic core formed by the magnetic material, the strong magnetic core comprises one or more of Fe₃O₄, iron, cobalt, nickel, or ferrite; and
a titanium oxide coating layer formed by the titanium oxide, the titanium oxide coating layer being coated on an outer surface of the strong magnetic core.

3. The magnetic titanium-based lithium adsorbent according to claim 2, wherein the strong magnetic core comprises Fe₃O₄, the titanium oxide coating layer comprises TiO₂, and a mole ratio of Ti in TiO₂ to Fe in Fe₃O₄ is between 1:2 and 1:5.

4. The magnetic titanium-based lithium adsorbent according to claim 2 or 3, wherein an average particle size of the magnetic composite is between 20 nm and 120 nm, an average particle size of the strong magnetic core is between 10 nm and 100 nm, a thickness of the titanium oxide coating layer is between 5 nm and 20 nm, and a thickness of the lithium adsorption layer is between 5 nm and 50 nm.

5. The magnetic titanium-based lithium adsorbent according to any one of claims 1-4, wherein a saturation magnetization of the magnetic composite is between 20 emu/g and 60 emu/g.

6. The magnetic titanium-based lithium adsorbent according to any one of claims 1-5, wherein the lithium adsorption layer is a porous structure with a pore volume of between 0.01 mL/g and 0.30 mL/g.

7. The magnetic titanium-based lithium adsorbent according to any one of claims 1-6, wherein the lithium titanium oxide comprises Li₄₋ₓTi_{5-y}M_{y}O₁₂, wherein x is selected from between 0 and 2, y is selected from between 0 and 0.1, and M is one or more of Mg, Cr, Co, Ni, Mo, Zr, or Zn.

8. The magnetic titanium-based lithium adsorbent according to any one of claims 1-7, further comprising an outer coating layer, wherein the outer coating layer is located on an outer surface of the lithium adsorption layer, the outer coating layer comprises a metal oxide, the metal oxide is an oxide of one or more of Mg, Cr, Co, Ni, Mo, Zr, Ti, Zn, or Li, and a thickness of the outer coating layer is between 1 nm and 10 nm.

9. A method for preparing a magnetic titanium-based lithium adsorbent, comprising:
obtaining a magnetic composite comprising a magnetic material and a titanium oxide;
preparing a precursor of the magnetic titanium-based lithium adsorbent by: mixing the magnetic composite, a titanium salt solution, and a lithium salt solution for reaction, and separating solid and liquid to obtain intermediate product particles; and calcining the intermediate product particles to form a lithium adsorption layer on an outer surface of the magnetic composite, to obtain the precursor of the magnetic titanium-based lithium adsorbent; and
carrying out pre-desorption by: adding the precursor of the magnetic titanium-based lithium adsorbent into an acidic solution to desorb a part of lithium from the lithium adsorption layer, to obtain the magnetic titanium-based lithium adsorbent.

10. The method for preparing the magnetic titanium-based lithium adsorbent according to claim 9, wherein the obtaining the magnetic composite comprises:
preparing an iron salt solution comprising ferrous ions and ferric ions;
preparing a Fe₃O₄ dispersion by: adding aqueous ammonia into the iron salt solution dropwise at between 40°C and 60°C, and separating solid and liquid to obtain the Fe₃O₄ dispersion; and
carrying out coating by: preparing a TiO₂ dispersion from a nano-TiO₂, mixing the TiO₂ dispersion with the Fe₃O₄ dispersion, and separating solid and liquid to obtain the magnetic composite.

11. The method for preparing the magnetic titanium-based lithium adsorbent according to claim 10, wherein in the iron salt solution, a concentration of iron ions is between 0.5 mol/L and 3 mol/L, wherein a mole ratio of the ferrous ions to the ferric ions is 1:2; and based on the weight of the TiO₂ dispersion as 100%, TiO₂ is added in an amount of between 10 wt.% and 20 wt.%.

12. The method for preparing the magnetic titanium-based lithium adsorbent according to claim 10 or 11, wherein after the magnetic composite is obtained, the magnetic composite is washed with deionized water and absolute ethanol, dried, and ground to a particle size of between 20 nm and 120 nm.

13. The method for preparing the magnetic titanium-based lithium adsorbent according to any one of claims 9 to 12, wherein the preparing the precursor of the magnetic titanium-based lithium adsorbent comprises: adding the magnetic composite into the titanium salt solution with stirring, and adding the lithium salt solution into the titanium salt solution for reaction; and a mole ratio of Fe in the magnetic composite to Li in the lithium salt solution is controlled to be between 1:5 and 1:10, and a mole ratio of Li in the lithium salt solution to Ti in the titanium salt solution is controlled to be between 0.5:1 and 1:3.

14. The method for preparing the magnetic titanium-based lithium adsorbent according to any one of claims 9 to 13, wherein in the preparing the precursor of the magnetic titanium-based lithium adsorbent, the titanium salt solution comprises a solution of one or more of titanyl sulfate or metatitanic acid, and a concentration of the titanium salt solution is between 1 mol/L and 4 mol/L; and the lithium salt solution comprises a solution of one or more of lithium chloride, lithium sulfate, lithium hydroxide, lithium nitrate, or lithium acetate, and a concentration of the lithium salt solution is between 1 mol/Land 3 mol/L.

15. The method for preparing the magnetic titanium-based lithium adsorbent according to any one of claims 9 to 14, wherein before the calcining, adding a metal salt into the intermediate product particles for doping.

16. The method for preparing the magnetic titanium-based lithium adsorbent according to any one of claims 9 to 15, wherein after the calcining, adding a metal oxide into the precursor of the magnetic titanium-based lithium adsorbent for calcining and coating.
